# EUROPEAN PATENT APPLICATION

(11) **EP 2 444 469 A1**
(43) Date of publication of application: **25.04.2012**
(21) Application number: 10789221.8
(22) Date of filing: 16.06.2010
(51) Int. Cl.: C09K 5/04, C10M 107/34, C10M 129/04, C10M 133/38, C10M 143/00, F25B 1/00

(54) **REFRIGERATION CIRCUIT AND METHOD FOR IMPROVING SAME**

(30) Priority: 17.06.2009 JP 2009144077; 11.09.2009 JP 2009210258
(71) Applicant: Sanden Corporation, Isesaki-shi, Gunma 372-8502 (JP)
(72) Inventor: KAMISHIMA, Hiromitsu, Isesaki-shi Gunma 372-8502 (JP); MATSUZAKI, Tomoaki, Isesaki-shi Gunma 372-8502 (JP); MATSUMOTO, Yuuichi, Isesaki-shi Gunma 372-8502 (JP)
(74) Representative: Prüfer & Partner GbR European Patent Attorneys
(86) International application number: PCT/JP2010/003980
(87) International publication number: WO 2010/146841

(57) **Abstract**

Disclosed is a refrigeration circuit in which a scroll compressor is used as a compressor, an unsaturated fluorinated hydrocarbon refrigerant is used as a refrigerant, and an ether-based lubricant such as a polyalkylene glycol is used as a refrigeration machine oil, and wherein a wax-like solid material, which causes clogging of the refrigeration circuit or deterioration of the refrigeration performance, is prevented from being generated. Specifically, a wax-like solid material is prevented from being generated in a refrigeration circuit by adding a lubricant type component having no polyoxyalkylene structure such as an ester-based lubricant, an alcohol-based friction modifier, an olefin-based friction modifier, a polyolefin-based lubricant, an alkyl aromatic lubricant or a silicone-based lubricant, or a metal deactivation agent such as benzotriazole to an ether-based lubricant such as a polyalkylene glycol.

## Description

### Technical Field of the Invention

The present invention relates to a refrigeration circuit in which refrigerant containing unsaturated fluorinated hydrocarbon compound typified by HFO-1234yf as a part or the whole thereof is used, and also relates to a method for improving the refrigeration circuit.

### Background Art of the Invention

In a refrigeration circuit used in an air conditioning system for vehicles, etc., HFC134a which is a kind of fluorocarbons is currently used as a typical refrigerant and polyalkylene glycol (PAG) is currently used as a typical refrigerating machine oil.

At present, an approach for the prevention of global warming is active on a worldwide scale. Particularly in EU countries, in the F-gas regulation, a regulation on the high global warming potential (GWP1430) of the typical refrigerant for vehicles HFC134a has been promoted, and the prohibition of the use of this refrigerant for a new car from 2012 and the prohibition of the use of this refrigerant for every car from 2017 have been adopted. As a result, similar regulations are being spread all over the world. Corresponding to this trend, refrigerant manufacturers, refrigerating machine oil manufacturers and air conditioning system manufacturers are carrying out research and development of a new refrigerant and a refrigerating machine oil for the new refrigerant with the aim of further reducing and improving global warming potential (GWP) while maintaining its safety. Presently, as a new refrigerant with the aim of such an improvement, various unsaturated fluorinated hydrocarbon refrigerants having an evaporation temperature in a range of -50 to -10 °C are being developed by introducing an unsaturated bond into a molecule thereof so as to lower its GWP so as to achieve next-generation refrigerants. In particular, it is likely that unsaturated fluorinated hydrocarbon refrigerants such as HFO1234yf and HFO1234ze will be adopted on a global scale. Experimental research with the objective of an improvement in order to apply these materials to a refrigeration circuit such as an air conditioning system for vehicles is becoming active.

### Summary of the Invention

### Problems to be solved by the Invention

Although the unsaturated fluorinated hydrocarbon refrigerant has low GWP value as one of its features, it has high reactivity, low thermal stability and low chemical stability relative to a conventional saturated fluorinated hydrocarbon refrigerant such as HFC134a since it has an unsaturated bond in a molecule. Inventors of the present invention carried out an experiment for studying the thermal and chemical stability of the refrigerant in an actual refrigeration circuit, and confirmed a fact that, in a refrigeration circuit of an experimental system using a scroll compressor as a compressor, HFO1234yf as refrigerant and polyalkylene glycol as a refrigerating machine oil, a wax-like solid is generated in the compressor especially under high-speed and heavy load conditions. On the other hand, in a refrigeration circuit of an experimental system where a reciprocating compressor is used instead of the scroll compressor, it found out that a wax-like solid is not generated even under high-speed and heavy load conditions. Because this wax-like solid causes a clog of a refrigeration circuit or deterioration of refrigeration performance, a critical defect such as significant deterioration of refrigeration performance or failure of the refrigeration circuit might be caused. The wax-like solid is supposed to be generated not only in the case of HFO1234yf, but also in the cases of other unsaturated fluorinated hydrocarbon refrigerants having a similar unsaturated bond in a molecule. Thus, if an unsaturated fluorinated hydrocarbon refrigerant is used in a refrigeration circuit, it is necessary to prevent such a wax-like solid from being generated in a compressor and in the refrigeration circuit, especially even under high-speed and heavy load conditions.

Therefore, an object of the present invention is to prevent a wax-like solid, which can be a cause of clogging of the refrigeration circuit and degradation in refrigeration performance, from being generated in a refrigeration circuit provided with a scroll compressor as a compressor, an unsaturated fluorinated hydrocarbon refrigerant and an ether-based lubricant such as polyalkylene glycol as refrigeration machine oil.

### Means for solving the Problems

The inventors of the present invention carried out a chemical analysis of the wax-like solid, and confirmed that this solid is a polymerized paraffin with a low molecular mass having a melting point in a range of approximately 50 to 72 °C. According to the result of the analysis, the inventors assume a generation mechanism for the wax-like solid as described below. Namely, in a scroll compressor, a refrigerating machine oil used is required to have high lubricating performance because a scroll member of a movable scroll and a scroll member of a fixed scroll come into sliding contact with each other in a state of being pressed strongly by each other in order to oppose the action of high-temperature and high-pressure refrigerant gas concurrently with a rotational movement of the movable scroll. However, lubricating performance of an ether-based lubricant such as polyalkylene glycol to a refrigerant having an unsaturated bond such as HF01234yf is not quite enough for the scroll compressor. Thus, under high-temperature and heavy load conditions, active metal surface is liable to be exposed locally at the sliding contact surface of the compression mechanism part as accompanying with the rotational movement of the movable scroll. Meanwhile, an unsaturated fluorinated hydrocarbon refrigerant has high reactivity, low thermal stability and low chemical stability. As a result, presumably, the exposed active metal surface acts as a reaction catalyst and induces a reaction between the unsaturated fluorinated hydrocarbon refrigerant and a polyoxyalkylene structure of the ether-based lubricant under an atmosphere of high-temperature and high-pressure refrigerant gas in the compression mechanism part of the scroll compressor, and accordingly, decomposition of the unsaturated fluorinated hydrocarbon refrigerant and generation of a polymerizable olefin which is a decomposed ingredient thereof occur, and further, this polymerizable olefin polymerizes to form a polymerized paraffin by the polymerization catalytic activity of the active metal surface under pressure and heat in the compressor. Therefore, in order to prevent generation of the wax-like solid, it can be an effective means to compensate for the insufficiency of lubricating performance of the ether-based lubricant by combined use of another lubricant-type component having no polyoxyalkylene structure. Additionally, it can also be an effective means to prevent the ether-based lubricant and the unsaturated fluorinated hydrocarbon refrigerant from coming into contact with this active metal surface that the exposed active metal surface is deactivated immediately with a metal deactivation agent. The present invention has been completed according to such a technical knowledge and idea.

Namely, a refrigeration circuit according to the present invention is a refrigeration circuit provided with a scroll compressor for compressing a refrigerant, **characterized in that** the refrigerant contains an unsaturated fluorinated hydrocarbon refrigerant as a part or the whole thereof, a refrigeration machine oil comprises an ether-based lubricant having a polyoxyalkylene structure, and the ether-based lubricant contains one or more selected from a lubricant type component having no polyoxyalkylene structure and a metal deactivation agent. According to the present invention, the lubricant-type component and the metal deactivating agent function as a polymerized paraffin inhibitor preventing decomposition of unsaturated fluorinated hydrocarbon refrigerant caused by operation of the compressor and generation of polymerized paraffin originating from polymerization of a polymerizable decomposed substance.

Further, a method for improving a refrigeration circuit according to the present invention is a method for improving a refrigeration circuit provided with a scroll compressor as a compressor for compressing a refrigerant, **characterized in that**, by a condition where the refrigerant contains an unsaturated fluorinated hydrocarbon refrigerant as a part or the whole thereof, a refrigeration machine oil comprises an ether-based lubricant having a polyoxyalkylene structure, and the ether-based lubricant contains one or more selected from a lubricant type component having no polyoxyalkylene structure and a metal deactivation agent, decomposition of the unsaturated fluorinated hydrocarbon refrigerant caused by operation of the compressor and generation of a polymerized paraffin originating from polymerization of a polymerizable decomposed substance are prevented. Where, chemical structure of the ether-based lubricant can be a polyether structure which has not been denatured, and can also be a polyether structure that a terminal structure of either one end or both ends thereof has been denatured by an ether group, an ester group, etc.

In the above-described configuration, even if an unsaturated fluorinated hydrocarbon refrigerant having a CH2=CH- or CH2=CF- group at an end of a molecule where thermal and chemical stability is particularly low is used, generation of polymerized paraffin can also be prevented effectively. Further, even if HFO1234yf and HFO1234ze, which are typical refrigerants as unsaturated fluorinated hydrocarbon refrigerant, are used in the above-described configuration, generation of polymerized paraffin can also be prevented effectively. An ester-based lubricant such as polyol ester, an alcohol-based friction modifier such as an aliphatic polyol having a carbon number in a range of 2 to 25, an olefin-based friction modifier such as an olefin having a carbon number in a range of 10 to 18, a polyolefin-based lubricant comprising poly-α-olefin, alkyl aromatic lubricant such as alkylbenzene and alkylnaphthalene, and a silicone-based lubricant are preferred as a lubricant-type component having no polyoxyalkylene structure. Benzotriazole is preferred as a metal deactivating agent. When an acid capturing agent for capturing hydrogen fluoride generated by decomposition of the unsaturated fluorinated hydrocarbon refrigerant is used together in the above-described configuration, the polymerized paraffin can be prevented from generating further effectively. Epoxy-alkane having a carbon number in a range of 8 to 25 is preferred as an acid capturing agent.

The refrigeration circuit and the method for improving the refrigeration circuit of the present invention can be applied to any refrigeration circuit used in the area of home electronics, residential air conditioning system, distribution system, etc., and is suitable for a refrigeration circuit for an automotive air conditioning system in particular. By applying the present invention to a refrigeration circuit for an automotive air conditioning system, it is possible to realize a refrigeration circuit wherein the environmental load is reduced by using unsaturated fluorinated hydrocarbon refrigerant such as HFO1234yf and the comparable operational stability as before can be achieved.

### Effect according to the Invention

According to the present invention, in a refrigeration circuit using a scroll compressor as a compressor, an unsaturated fluorinated hydrocarbon refrigerant as refrigerant and an ether-based lubricant having a polyoxyalkylene structure as lubricant, by compensating for shortage in lubricating performance of the ether-based lubricant by combined use of another lubricating component having no polyoxyalkylene structure, exposure of active metal surface accompanying a sliding movement of a compression mechanism part is prevented, and therefore it is possible to prevent the unsaturated fluorinated hydrocarbon refrigerant and the polyoxyalkylene structure of the ether-based lubricant from reacting through catalytic activity of the exposed active metal surface under an atmosphere of high-temperature and high-pressure refrigerant gas in the compression mechanism part. As a result, it is possible to prevent the generation of polymerized paraffin which becomes a cause of clogging in the refrigeration circuit and degradation of refrigeration performance.

### Brief explanation of the drawings

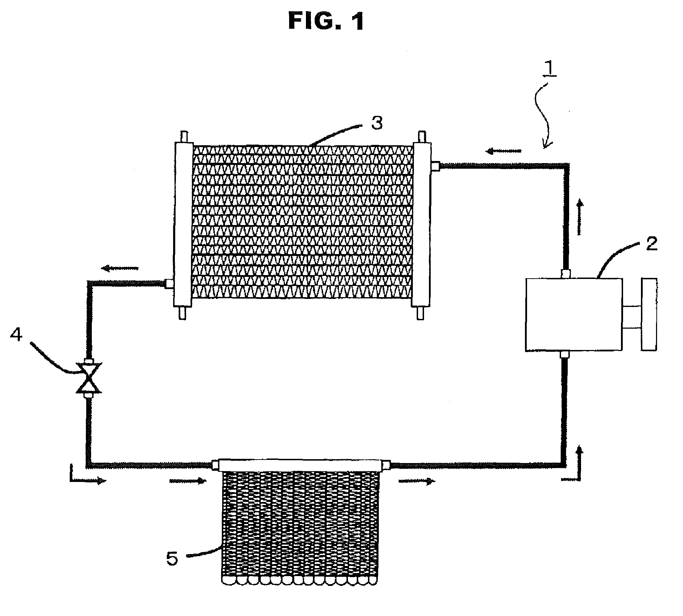

[Fig. 1] Fig. 1 is a schematic framework showing an example of a basic equipment layout of a refrigeration cycle as an object of the present invention.

### Embodiments for carrying out the Invention

Fig. 1 shows a basic configuration of a refrigeration circuit used in an air conditioning system for vehicles, etc. In Fig. 1, refrigeration circuit 1 has compressor 2 for compressing refrigerant, condenser 3 for condensing compressed refrigerant, expansion valve 4 as a pressure reduction and expansion means for reducing in pressure and expanding condensed refrigerant, and evaporator 5 for evaporating pressure-reduced and expanded refrigerant, where the refrigerant is circulated in refrigeration circuit 1 as changing its state.

The scroll compressor used in the present invention is not particularly limited. As a configuration material for the compressor, not only an Fe-based material but also a light metal-based material such as aluminum, magnesium or an alloy thereof can be used. In a scroll on a movable side in a compression mechanism part, the light metal-based material such as aluminum, magnesium or an alloy thereof, which has a lighter specific gravity than the Fe-based material, is used in many cases in order to reduce an inertial force. Though these Fe-based material and light metal-based material have high reactivity in a state of pure metal material, their surfaces are generally covered with an oxidized coating layer, and further, by performing surface treatment for the purpose of improvement of lubricity and protection, their surfaces are in a state where activity of the metal material is suppressed. However, if lubricating performance of refrigeration machine oil is not quite enough, the active metal surface will be exposed because the oxidized coating layer is lost due to friction, etc. caused by a rotational movement of a rotational scroll. When the active metal surface is exposed, the active metal surface exhibits extremely high catalytic activity because of the high reactivity of the metal material thereof. Thus, when an ether-based lubricant and an unsaturated fluorinated hydrocarbon refrigerant come into contact with the active metal surface under an atmosphere of high-temperature high-pressure refrigerant, the unsaturated fluorinated hydrocarbon refrigerant reacts with a polyoxyalkylene structure of the ether-based lubricant by the catalytic activity of the active metal surface. By this reaction, decomposition of the unsaturated fluorinated hydrocarbon refrigerant and generation of a polymerizable olefin as a decomposed substance occur, and further, this polymerizable olefin polymerizes to form a polymerized paraffin by the catalytic activity of the active metal surface under the atmosphere of high-temperature and high-pressure refrigerant gas. However, according to the present invention, because the ether-based lubricant contains a lubricant type component having no polyoxyalkylene structure and the lubricant type component does not react with the unsaturated fluorinated hydrocarbon refrigerant even under the atmosphere of high-temperature and high-pressure refrigerant gas, the exhibition of the active metal surface is prevented by compensating for a shortage of lubricating performance of the ether-based lubricant, and thereby preventing decomposition of the unsaturated fluorinated hydrocarbon refrigerant, generation of the polymerizable olefin as the decomposed substance, and generation of the polymerized paraffin originating from polymerization of the polymerizable olefin.

As the unsaturated fluorinated hydrocarbon refrigerant used in the present invention, for example, a hydrofluoropropene such as 1,2,3,3-tetrafluoro-1-propene (HFC-1234ye); 1,3,3,3-tetrafluoro-1-propene (HFC-1234ze); 2,3,3,3-tetrafluoro-1-propene (HFC-1234yf); 1,1,2,3-tetrafluoro-1-propene (HFC-1234yc); 1,1,3,3-tetrafluoro-1-propene (HFC-1234zc); 2,3,3-trifluoro-1-propene (HFC-1243yf); 3,3,3-trifluoro-1-propene (HFC-1243zf); 1,1,2-trifluoro-1-propene (HFC-1243yc); 1,1,3-trifluoro-1-propene (HFC-1243ye); 1,3,3-trifluoro-1-propene (HFC-1243ze); and 3,3,3,-trifluoropropene (HFC-1243zf): a hydrofluorobutene such as 2,3,3,4,4,4-hexafluoro-1-butene (CF₃CF₂CF=CH₂); 3,3,3-trifluoro-2-(trifluoromethyl)-1-propene (CH₂=C(CF₃)₂); 1,1,1,3,4-pentafluoro-2-butene (CF₃CH=CFCH₂F); 3,3,4,4,4-pentafluoro-1-butene (CF₃CF₂CH=CH2); 2,3,3,4,4-pentafluoro-1-butene (CH₂=CFCF₂CHF₂); 3,3,4,4-tetrafluoro-1-butene (CH₂=CHCF₂CHF₂); 3,3-difluoro-2-(difluoromethyl)-1-propene (CH₂=C(CHF₂)₂); 3,3,4,4,4-pentafluoro-2-(trifluoromethyl)-1-butene (CH₂=C(CF₃)CF₂CF₃); 3,4,4,4-tetrafluoro-3-(trifluoromethyl)-1-butene ((CF₃)₂CFCH=CH₂); 2,4,4,4-tetrafluoro-3-(trifluoromethyl)-1-butene (CH₂=CFCH(CF₃)₂); and 4,4,4-trifluoro-3-(trifluoromethyl)-1-butene (CH₂=C(CF₃)CH₂CF₃): a hydrofluoropentene such as 3,3,4,4,5,5,5-heptafluoro-1-pentene (CF₃CF₂CF₂CH=CH₂); 2,3,3,4,4,5,5-heptafluoro-1-pentene (CH₂=CFCF₂CF₂CHF₂); 3,3,4,5,5,5-hexafluoro-1-pentene (CH₂=CHCF₂CHFCF3); and 4,5,5,5-tetrafluoro-4-(trifluoromethyl)-1-pentene (CH₂=CHCH₂CF(CF₃)₂): and a hydrofluorohexene such as 3,3,4,4,5,5,6,6,6-nonafluoro-1-hexene (CF₃CF₂CF₂CF₂CH=CH₂); and 4,4,5,5,6,6,6-heptafluoro-1-hexene (CH₂=CHCH₂CF₂CF₂CF₃) can be exemplified. In particular, among unsaturated fluorinated hydrocarbon refrigerants, one which has a group of CH2=CH- or CH2=CF- at an end of the molecule is more significant in a degree to generate a polymerized paraffin by reacting with an ether-based lubricant having a polyoxyalkylene structure in a scroll compressor than that which does not have such a group at an end of the molecule. Therefore, in a refrigeration circuit using an unsaturated fluorinated hydrocarbon refrigerant having such a group, applying the present invention is particularly effective.

The above-described compounds are used as a single one or a mixture of two or more. In addition, the above-described compounds can also be used in combination with a saturated halogenated hydrocarbon refrigerant or hydrocarbon-based refrigerant. As the typical saturated halogenated hydrocarbon refrigerant and hydrocarbon-based refrigerant, for example, 1,1,1,2-tetrafluoroethane (R134a), 1,1,2-difluoroethane (R152a), difluoromethane (R32), pentafluoroethane (R125), 1,1,1-trifluoroethane (R143a), 1,1,1,2,3,3,3-heptafluoropropane (R227ea), 1,1,1,2,3,4,4,5,5,5-decafluoropentane (R43-10mee), 1,1,1,3,3-pentafluorobutane (R365mfc), 2,2-dichloro-1,1,1-trifluoroethane (R123), 1,1,1,3,3-pentafluoropropane (R245fa), 1,2-dichloro-1,1,2,2-tetrafluoroethane (R114), 1,1,1,3,3,3-hexafluoropropane (R236fa) and dichlorodifluoromethane (R12) can be exemplified. As a typical hydrocarbon refrigerant, for example, propane, propylene, cyclopropane, n-butane, isobutane, n-pentane, 2-methylbutane (isopentane), cyclobutane, cyclopentane, 2,2-dimethylpropane, 2,2-dimethylbutane, 2,3-dimethylbutane, 2,3-dimethylpentane, 2-methylhexane, 3-methylhexane, 2-methylpentane, 3-ethylpentane, 3-methylpentane, cyclohexane, n-heptane, methylcyclopentane, and n-hexane can be exemplified.

As the lubricant type component having no polyoxyalkylene structure used as a polymerized paraffin inhibitor in the present invention, for example, an alcohol-based friction modifier; an olefin-based friction modifier; an ester-based lubricant such as a diester, a polyol ester, etc.; an alkyl aromatic lubricant such as alkylbenzene and alkylnaphthalene, etc.; and a silicone-based lubricant can be exemplified, and particularly, the alcohol-based friction modifier, the olefin-based friction modifier and the ester-based lubricant are preferred due to their significant effect on preventing a polymerized paraffin. The ester-based lubricant is preferred in particular.

As the alcohol-based friction modifier used as a polymerized paraffin inhibitor in the present invention, for example, a higher alcohol having a carbon number in a range of 6 to 20 such as an octyl alcohol, a decyl alcohol, myristyl alcohol, lauryl alcohol, lauryl alcohol, myristyl alcohol, a dodecyl alcohol, cetyl alcohol, palmityl alcohol, oleyl alcohol, stearyl alcohol, linoleyl alcohol, etc.; a dihydric alcohol having a carbon number in a range of 2 to 25 such as ethylene glycol, diethylene glycol, propylene glycol, dipropylene glycol, neopentyl glycol, 1,3-propanediol, 1,4-butanediol, 2-methyl-1,3-propanediol, 1,5-pentanediol, 1,6-hexanediol, 2-ethyl-2-methyl-1,3-propanediol, 2-methyl-2,4-pentanediol, 1,7-heptanediol, 2-methyl-2-propyl-1,3-propanediol, 2,2-diethyl-1,3-propanediol, 1,8-octanediol, 1,9-nonanediol, 2-butyl-2-ethyl-1,3-propanediol, 1,10-decanediol, 1,11-undecanediol, 1,12-dodecanediol, 1,13-tridecanediol, 1,14-tetradecanediol, 1,15-heptadecanediol, 1,16-hexadecanediol, 1,17-heptadecanediol, 1,18-octadecanediol, 1,19-nonadecanediol, 1,20-icosanediol, etc.; a trihydric alcohol such as glycerin, trimethylolethane, trimethylolpropane, trimethylolbutane, 1,2,4-butanetriol, 1,3,5-pentanetriol, 1,2,6-hexanetriol, etc.; and a polyol having a carbon number in a range of 3 to 20 such as a dimer and a trimer thereof. Among above-described compounds, the aliphatic polyol having a carbon number in a range of 2 to 25 is preferred. An amount of addition of the alcohol-based friction modifier to the ether-based lubricant is preferably in a range of 0.1 to 10 wt. %, and the amount of addition thereof to an amount of refrigerant enclosed is preferably in a range of 0.02 to 2 wt. %.

As the olefin-based friction modifier used as a polymerized paraffin inhibitor in the present invention, for example, 1-hexene, 1-heptene, 1-octene, 1-nonene, 1-decene, 1-undecene, 1-dodecene, 1-tridecene, 1-tridecene, 1-tetradecene, 1-pentadecene, 1-hexadecene, 1-heptadecene, 1-octadecene, a linear α-olefin; a branched α-olefin such as 4-methyl-1-pentene, 8-methyl-1-nonene, 7-methyl-1-decene, 6-methyl-1-undecene, 6,8-dimethyl-1-decene, etc. can be exemplified, and among these compounds, a linear α-olefin having a carbon number in a range of 10 to 16 is preferred. An amount of addition of the olefin-based friction modifier to an ether-based lubricant is preferably in a range of 0.5 to 10 wt. %, and the amount of addition thereof to an amount of refrigerant enclosed is preferably in a range of 0.1 to 2 wt. %.

As the ester-based lubricant used as a polymerized paraffin inhibitor in the present invention, for example, a diester derived from an aliphatic diacid and monohydric alcohols, and a polyol ester derived from a polyol having a valence number of three or more and monovalent aliphatic acids can be exemplified. As the aliphatic diacid which can be a raw material of the diester, for example, an aliphatic diacid having a carbon number in a range of 5 to 10 such as glutaric acid, pimelic acid, suberic acid, azelaic acid, sebacic acid, 1,2-cyclohexane dicarboxylic acid, 4-cyclohexene-1,2-dicarboxylic acid, etc. can be exemplified, and as the monohydric alcohol, for example, a monohydric alcohol having a carbon number in a range of 4 to 18 such as butanol, pentanol, hexanol, heptanol, octanol, nonanol, decanol, undecanol, dodecanol, tridecanol, tetradecanol, pentadecanol, etc. can be exemplified. As the polyol which can be a raw material of the polyol ester, for example, a dihydric alcohol having a carbon number in a range of 2 to 15 such as ethylene glycol, 1,3-propanediol, propylene glycol, 1,4-butanediol, 1,2-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, 1,12-dodecanediol, etc.; a trihydric alcohol having a carbon number in a range of 3 to 8 such as trimethylol ethane, trimethylol propane, trimethylol butane, glycerin, etc.; a polyol having a valence number of 3 or more such as pentaerythritol, dipentaerythritol, diglycerin, sorbitol, xylitol, etc. can be exemplified, and, in particular, a hindered alcohol such as neopentyl glycol, trimethylol ethane, trimethylol propane, trimethylol propane, trimethylol butane, pentaerythritol is preferred. As the aliphatic acid which can be a raw material of a polyol ester, for example, an aliphatic acid having a carbon number in a range of 5 to 20 such as pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, icosanoic acid, oleic acid, etc. can be exemplified. The polyol ester may have two or more ester groups, may be a partial ester in which some of the hydroxyl groups of a polyol remain unesterified, or may be a total ester in which all the hydroxyl groups are esterified. An amount of content of the ester-based lubricant to the ether-based lubricant is preferably in a range of 1 to 99 wt. %. An amount of addition of the ester-based lubricant to an amount of refrigerant enclosed is preferably in a range of 0.2 to 20 wt. %.

As the polyolefin-based lubricant used as a polymerized paraffin inhibitor in the present invention, for example, an oligomer or co-oligomer of α-olefin having a carbon number in a range of 2 to 16 such as an octene oligomer, a decene oligomer, an ethylene-propylene co-oligomer, etc. can be exemplified. An amount of addition of the olefin-based lubricant to the ether-based lubricant is preferably in a range of 0.1 to 3 wt. %, and the amount of addition thereof to an amount of refrigerant enclosed is preferably in a range of 0.02 to 0.6 wt. %.

As the alkyl aromatic lubricant used as a polymerized paraffin inhibitor in the present invention, for example, an alkylbenzene, which has 1 to 4 alkyl groups having a carbon number in a range of 1 to 15 and in which the total carbon number of these alkyl groups is in a range of 9 to 15, can be exemplified. As the alkyl group, for example, methyl group, ethyl group, propyl group, butyl group, pentyl group, hexyl group, heptyl group, octyl group, nonyl group, decyl group, undecyl group, dodecyl group, tridecyl group, tetradecyl group, pentadecyl group, hexadecyl group, heptadecyl group, octadecyl group, nonadecyl group, etc. can be exemplified. Further, as the alkyl aromatic lubricant, an alkylnaphthalene such as a n-propyl naphthalene, an isopropyl naphthalene, a butyl naphthalene, a pentyl naphthalene, an ethyl-propyl naphthalene, a methyl-pentyl naphthalene, an ethyl-butyl naphthalene, a dimethyl-butyl naphthalene, a methyl-hexyl naphthalene, an ethyl-pentyl naphthalene, a propyl-butyl naphthalene, a dimethyl-pentyl naphthalene, a methyl-heptyl naphthalene, an ethyl-hexyl naphthalene, a propyl-pentyl naphthalene, a dimethyl-hexyl naphthalene, an ethyl-methyl naphthalene, a diethyl naphthalene, a methyl-propyl naphthalene, a methyl-isopropyl naphthalene, a dipropyl naphthalene, a butyl-methyl naphthalene, a dibutyl naphthalene, a trimethyl naphthalene, a triethyl naphthalene, an ethyl-dimethyl naphthalene, a diethyl-methyl naphthalene, a dimethyl-propyl naphthalene, a methyl-dipropyl naphthalene, a butyl-dimethyl naphthalene, etc. can be exemplified. It is preferred that an amount of addition of the alkyl aromatic lubricant to the ether-based lubricant is in a range of 0.5 to 10 wt. %, and it is preferred that the amount of addition thereof to the refrigerant enclosed is in a range of 0.1 to 2 wt. %.

As the metal deactivation agent which is used as the polymerized paraffin inhibitor in the present invention, for example, a triazole derivative such as triazole and N,N-dialkyl-triazole-alkylamine, a benzotriazole derivative such as benzotriazole and N,N-dialkyl-benzotriazole-methylamine; a thiadiazole derivative such as thiadiazole, benzotriazole thiadiazole and 2,5-dialkylmercapto-1,3,4-thiadiazole; a benzimidazole derivative such as benzimidazole and 2-alkyldithio-benzimidazole can be exemplified. Among these compounds, benzotriazole and its derivatives are preferred. An amount of addition of the metal deactivation agent to the ether-based lubricant is preferably in a range of 0.5 to 10 wt. %, and the amount of addition thereof to an amount of refrigerant enclosed is preferably in a range of 0.1 to 2 wt. %.

Even when generation of the polymerized paraffin in a refrigeration circuit is prevented by a condition where the ether-based lubricant contains a lubricant type component having no polyoxyalkylene structure, there is a fear that hydrogen fluoride originating from decomposition of the unsaturated fluorinated hydrocarbon refrigerant may be generated in the refrigeration circuit. If hydrogen fluoride is generated, there is a fear that it may promote further decomposition of the unsaturated fluorinated hydrocarbon refrigerant. Therefore, in addition to a lubricant type component as a polymerized paraffin inhibitor, it is preferred that an appropriate amount of an acid capturing agent is added to the refrigeration circuit. This acid capturing agent may be added individually to the refrigeration circuit apart from refrigerant and refrigeration machine oil, or may be added at an appropriate amount as a preparative mixture with refrigerant or in combination with various additive agents, which are typically contained in refrigeration machine oil, such as an antioxidant and an extreme pressure agent. The acid capturing agent can also contribute to prevention of corrosion and deterioration of a compressor and pipe of the refrigeration circuit. As the acid capturing agent, for example, an epoxy compound such as an epoxide alkane, an aliphatic acid glycidyl ester, an aromatic carboxylic acid glycidyl ester; an orthoester; an oxirane compound; acetals; a carbodiimide can be exemplified. Among these compounds, for example, a glycidyl ester of an aliphatic monocarboxylic acid having a carbon number in a range of 6 to 16 such as 2-ethylhexanoic acid glycidyl ester, 3,5,5-trimethylhexanoic acid glycidyl acid, capric acid glycidyl ester, lauric acid glycidyl ester, versatic acid glycidyl ester, myristic acid glycidyl ester, etc. is preferred; and the epoxy alkane having a carbon number in a range of 8 to 25 such as 1,2-epoxynonane, 1,2-epoxydecane, 1,2-epoxyundecane, 1,2-epoxydodecane, 1,2-epoxytetradecane, 1,2-epoxypentadecane, 1,2-epoxyhexadecane, 1,2-epoxyheptadecane, 1,2-epoxyoctadecane, 1,2-epoxynonadecane, etc. is preferred in particular. An amount of addition of the acid capturing agent to the ether-based lubricant is preferably in a range of 0.5 to 15 wt. %, and the amount of addition thereof to an amount of refrigerant enclosed is preferably in a range of 0.1 to 3 wt. %.

### Practical Examples

The effect of prevention of generation of polymerized paraffin by the present invention can be confirmed by the following practical examples and comparative examples. In the practical examples and comparative examples, the refrigeration circuit shown in Fig. 1 is used. A scroll compressor in the refrigeration circuit has a movable scroll made of an aluminum alloy and a fixed scroll anodized with an aluminum alloy. The refrigeration circuit is filled with a specific amount of HF01234yf refrigerant, and the scroll compressor is filled with a specific amount of a mixture whose prescription is described in Table 1. In the practical examples and comparative examples, tricresyl phosphate as the extreme pressure agent is added to the ether-based lubricant at 1.0 % thereto. The rotational speed of the scroll compressor is set at 6,000 rpm, and the refrigeration circuit is operated continuously for 400 hours at this rotational speed. After the operation is finished, the inside of the compressor and the inside of the pipe of the refrigeration circuit are inspected in order to confirm the presence or absence of generation of a wax-like solid (a polymerized paraffin). By this confirmation examination, the result described in Table 1 is obtained. The criteria in the column of effect in Table 1 are as follows.
○: There is no solid which can be confirmed visually.
×: There is a solid which can be confirmed visually.

**[Table 1]**

| | Ether-based Lubricant | Lubricant Type Component Having No Polyoxyalkylene Structure (Polymerized Paraffin Inhibitor) | Acid Capturing Agent | Effectiveness of Inhibiting Polymerized Paraffin |
|---|---|---|---|---|
| Practical Example 1 | P P G | Trimethylolpropane- trilaurate 1% | - | ○ |
| Practical Example 2 | P P G | the same as above | 1,2-Epoxy-dodecane 1% | ○ |
| Practical Example 3 | P P G | Ethyleneglycol 1% | - | ○ |
| Practical Example 4 | P P G | the same as above | 1,2-Epoxy-tetradecane 1% | ○ |
| Practical Example 5 | P P G | 1-Hexadecene 1 % | - | ○ |
| Practical Example 6 | P P G | Decene olygomer 1 % | - | ○ |
| Practical Example 7 | P P G | Dibuthyl Naphthalene 1 % | - | ○ |
| Practical Example 8 | P P G | Silicone Oil 1 % | - | ○ |
| Practical Example 9 | P P G | Benzotriazole 1 % | - | ○ |
| Comparative Example | P P G | - | - | × |

In the above-described table, PPG means a polyalkylene glycol that a polypropylene glycol as a main structure is denatured with an ether at an end of the molecule, and % means wt. % to an amount of refrigerant enclosed.

As shown in Table 1, in case such as practical examples 1 to 8 where any of various lubricant type components having no polyoxyalkylene structure is added as the polymerized paraffin inhibitor to an ether-based lubricant (PAG), a polymerized paraffin is not generated even under a high-speed and high-load condition at a rotational speed of 6,000 rpm and a continuous operating time of 400 hours, whereas in case such as comparative example where a lubricant type component having no polyoxyalkylene structure is not added, a polymerized paraffin is generated under the same condition.

### Industrial Applications of the Invention

The present invention can be applied to any refrigeration circuit used in the area of home electronics, air conditioning systems for housing, logistics, etc., and specifically, in a refrigeration circuit for an air conditioning system for vehicles, it is possible to realize a refrigeration circuit which reduces the environmental load by using an unsaturated fluorinated hydrocarbon refrigerant such as HF01234yf and which achieves a conventional operation stability.

### Explanation of symbols

1: refrigeration circuit
2: compressor
3: condenser
4: expansion valve as pressure reduction and expansion means
5: evaporator

## Claims

1. A refrigeration circuit provided with a scroll compressor as a compressor for compressing a refrigerant, **characterized in that** said refrigerant contains an unsaturated fluorinated hydrocarbon refrigerant as a part or the whole thereof, a refrigeration machine oil comprises an ether-based lubricant having a polyoxyalkylene structure, and said ether-based lubricant contains one or more selected from a lubricant type component having no polyoxyalkylene structure and a metal deactivation agent.

2. A method for improving a refrigeration circuit provided with a scroll compressor as a compressor for compressing a refrigerant, **characterized in that**, by a condition where said refrigerant contains an unsaturated fluorinated hydrocarbon refrigerant as a part or the whole thereof, a refrigeration machine oil comprises an ether-based lubricant having a polyoxyalkylene structure, and said ether-based lubricant contains one or more selected from a lubricant type component having no polyoxyalkylene structure and a metal deactivation agent, decomposition of said unsaturated fluorinated hydrocarbon refrigerant caused by operation of said compressor and generation of a polymerized paraffin originating from polymerization of a polymerizable decomposed substance are prevented.

3. The refrigeration circuit according to claim 1 or the method for improving a refrigeration circuit according to claim 2, wherein said unsaturated fluorinated hydrocarbon refrigerant is an unsaturated fluorinated hydrocarbon refrigerant having a group of CH₂=CH- or CH₂=CF- at an end of a molecule.

4. The refrigeration circuit according to claim 1 or the method for improving a refrigeration circuit according to claim 2, wherein said unsaturated fluorinated hydrocarbon refrigerant is at least one of HFO1234yf and HFO1234ze.

5. The refrigeration circuit or the method for improving a refrigeration circuit according to any of claims 1 to 4, wherein said lubricant type component is an ester-based lubricant.

6. The refrigeration circuit or the method for improving a refrigeration circuit according to any of claims 1 to 4, wherein said lubricant type component is an ester-based lubricant comprising a polyol ester derived from a polyol and a univalent aliphatic acid.

7. The refrigeration circuit or the method for improving a refrigeration circuit according to any of claims 1 to 4, wherein said lubricant type component is an alcohol-based friction modifier.

8. The refrigeration circuit or the method for improving a refrigeration circuit according to any of claims 1 to 4, wherein said lubricant type component is an alcohol-based friction modifier comprising an aliphatic polyol having a carbon number in a range of 2 to 25.

9. The refrigeration circuit or the method for improving a refrigeration circuit according to any of claims 1 to 4, wherein said lubricant type component is an olefin-based friction modifier.

10. The refrigeration circuit or the method for improving a refrigeration circuit according to any of claims 1 to 4, wherein said lubricant type component is an olefin-based friction modifier comprising an olefin having a carbon number in a range of 10 to 18.

11. The refrigeration circuit or the method for improving a refrigeration circuit according to any of claims 1 to 4, wherein said lubricant type component is a polyolefin-based lubricant comprising a poly-α-olefin.

12. The refrigeration circuit or the method for improving a refrigeration circuit according to any of claims 1 to 4, wherein said lubricant type component is an alkyl aromatic lubricant.

13. The refrigeration circuit or the method for improving a refrigeration circuit according to any of claims 1 to 4, wherein said lubricant type component is an alkyl aromatic-based lubricant selected from an alkyl benzene and an alkyl naphthalene.

14. The refrigeration circuit or the method for improving a refrigeration circuit according to any of claims 1 to 4, wherein said lubricant type component is a silicone-based lubricant.

15. The refrigeration circuit or the method for improving a refrigeration circuit according to any of claims I to 4, wherein said metal deactivation agent is a benzotriazole-based component.

16. The refrigeration circuit or the method for improving a refrigeration circuit according to any of claims 1 to 15, wherein said ether-based lubricant contains an acid capturing agent.

17. The refrigeration circuit or the method for improving a refrigeration circuit according to any of claims 1 to 15, wherein said ether-based lubricant contains an epoxy alkane having a carbon number in a range of 8 to 25 as an acid capturing agent.
